Europäisches Patentamt

European Patent Office

Office européen des brevets

(19)

(11) Veröffentlichungsnummer: **0 212 070**
**A2**

(12) # EUROPÄISCHE PATENTANMELDUNG

(21) Anmeldenummer: 86106368.3

(22) Anmeldetag: 09.05.86

(51) Int. Cl.⁴: **B25B 27/00**

(30) Priorität: 05.08.85 DE 8522512 U

(43) Veröffentlichungstag der Anmeldung:
**04.03.87 Patentblatt 87/10**

(84) Benannte Vertragsstaaten:
**CH DE FR GB IT LI SE**

(71) Anmelder: **C. & E. FEIN GmbH & Co.**
**Leuschnerstrasse 41-47**
**D-7000 Stuttgart 1(DE)**

(72) Erfinder: **Der Erfinder hat auf seine Nennung verzichtet**

(54) **Handwerkzeug mit einer oszillierenden Antriebswelle.**

(57) Die Erfindung bezieht sich auf ein Handwerkzeug (1) mit einer oszillierenden Antriebswelle (2) zur Befestigung eines eine Arbeitsbewegung ausführenden Schwingarms (3). Gekennzeichnet ist die Erfindung dadurch, daß sich am Schwingarm (3), insbesondere am freien Schwingarmende, ein Schlagpreßglied (4) befindet.

Das erfindungsgemäße Handwerkzeug (1) kann man sowohl in der Fertigung als auch der Reparatur verwenden. Mit Hilfe des Schlagpreßglieds (4) läßt sich nämlich ein dazu passendes, flexibles Bauteil - (5), an einem anderen, insbesondere festen Bauteil - (6) sukzessive in einem fortlaufenden Arbeitsgang klopfend und pressend befestigen. Ein besonderes Anwendungsgebiet ist die Befestigung von Kantenschutzleisten, Dichtungen und dgl.auf harten und/oder scharfen Kanten, insbesondere im Kraftfahrzeugbau.

_Fig.1_

EP 0 212 070 A2

# Handwerkzeug mit einer oszillierenden Antriebswelle

Die Erfindung bezieht sich auf ein Handwerkzeug mit einer oszillierenden Antriebswelle zur Befestigung eines eine Arbeitsbewegung ausführenden Schwingarms. Derartige Handwerkzeuge sind an sich bekannt, beispielsweise durch die DE-OS 33 04 981. Bei dieser vorbekannten Ausführung wird das mit einem Schneidwerkzeug ausgerüstete Handwerkzeug zum Ausbau von eingeklebten Fensterscheiben, insbesondere an Kraftfahrzeugen, verwendet. Die Aufgabe der Erfindung besteht darin, den Anwendungsbereich eines derartigen Handwerkzeugs zu erweitern.

Zur Lösung dieser Aufgabe wird erfindungsgemäß vorgeschlagen, daß das Handwerkzeug gemäß dem Oberbegriff des Anspruchs 1 dadurch gekennzeichnet ist, daß sich am Schwingarm, insbesondere am freien Schwingarmende, ein Schlagpreßglied befindet. Während das Handwerkzeug des Standes der Technik ausschließlich im Reparaturbetrieb eingesetzt wird, kann man das erfindungsgemäße Handwerkzeug sowohl in der Fertigung als auch der Reparatur verwenden. Mit Hilfe des Schlagpreßglieds läßt sich nämlich ein dazu passendes, flexibles Bauteil an einem anderen, insbesondere festen Bauteil sukzessive in einem fortlaufenden Arbeitsgang klopfend und pressend befestigen. Ein besonderes Anwendungsgebiet ist die Befestigung von Kantenschutzleisten, Dichtungen und dgl. auf harten und/oder scharfen Kanten, insbesondere im Kraftfahrzeugbau. Dabei kann es sich um Leisten oder Keder handeln, die an Kraftfahrzeug-Karosseriekanten, beispielsweise im Bereich von Fenstern und Türen, Kofferraumklappen und dgl., befestigt werden und die flexibel genug sind, daß man sie fortlaufend entlang der Blechkante montieren kann, wobei sie letztere beidseits umfassen. Weil diese Kantenschutzleisten und dgl. vielfach lediglich durch Reibung gehalten werden, müssen sie besonders stramm auf dem Blechrand od. dgl. festsitzen, und dies erfordert eine entsprechende Kraft beim "Überstülpen". Mit dem erfindungsgemäßen Handwerkzeug geht diese Arbeit außerordentlich rasch und mühelose vonstatten. Man beginnt an geeigneter Stelle und klopft dann die Kantenschutzleiste, den Keder od. dgl. Zentimeter für Zentimeter auf die Kante auf, bis sie vollständig montiert ist. Das bedeutet, daß man dieses Handwerkzeug, genauso wie das vorbekannte, mit dem Trennmesser versehene, entlang der zu bearbeitenden Kante oder Fläche bewegt. Die Vorschubgeschwindigkeit richtet sich insbesondere nach der Leistungsstärke des Handwerkzeugs und der zu überwindenden Reibung beim Montieren des Kantenschutzes od. dgl.

In Weiterbildung der Erfindung wird vorgeschlagen, daß der Schwingarm formschüssig und abnehmbar mit der Antriebswelle verbunden ist. Man kann ihn dadurch leicht gegen einen anderen mit einem anderen Schlagpreßglied austauschen, so daß mit diesem Handwerkzeug die unterschiedlichsten Zierleisten, Kantenschutzleisten und dgl. befestigt werden können. Ein Austausch lediglich des Schlagpreßgliedes ist weniger empfehlenswert. Durch die formschlüssige Verbindung des Schwingarms mit der Antriebswelle ist eine den auftretenden Beanspruchungen entsprechende Verbindung mit der oszillierenden Antriebswelle sicher gewährleistet. Hierbei ist unterstellt, daß auch das Befestigungsmittel in bekannter Weise ausgebildet und gesichert ist. Weil der Schwingarm zumindest an seiner Befestigungsstelle von herkömmlicher Art sein kann, treten diesbezüglich durch die Verwendung eines Schlagpreßglieds anstelle einer Klinge keine speziellen Probleme auf.

In weiterer Ausgestaltung der Erfindung ist vorgesehen, daß die Arbeitsfläche des Schlagpreßglieds quer zur Längsachse oder Längsrichtung des Schwingarms bogen-oder U-förmig verläuft. Aufgrund dieser Formgestaltung kann das Schlagpreßglied zumindest den die Kante unmittelbar übergreifenden Teil des Kantenschutzes od. dgl. beidseits übergreifen und dadurch eine verkantungsfreie Montage gewährleisten. Wenn der Kantenschutz an seiner vom Schlagpreßglied unmittelbar beaufschlagten Stelle einen bogenför migen Querschnitt aufweist, so empfiehlt es sich, einen solchen Querschnitt auch beim Schlagpreßglied vorzusehen. Um ein Klemmen zu verhindern, sollte der Bogen des Schlagpreßglieds einen größeren Radius aufweisen. Andererseits kann man aber auch mit einem U-förmigen Querschnitt auf einen bogenförmigen Querschnitt oder Teilquerschnitt des Kantenschutzes od. dgl. einwirken. Maßgeblich ist auch der zur Verfügung stehende Raum, beispielsweise der Zwischenraum zwischen einer Fensterscheibe und einem im Abstand davon befindlichen Karosserierand. Wenn in diesem Zusammenhang von "Längsrichtung" des Schwingarms die Rede ist, so wird darunter die hauptsächliche Erstreckung des Schwingarms verstanden. Anders ausgedrückt, muß der Schwingarm nicht notwendigerweise ein flacher Hebelarm sein, vielmehr kann er auch abgewinkelt, abgekröpft oder bogenförmig verlaufen. Bei allen üblichen Schwingarmformen verläuft deren Längsrichtung etwa in Richtung der Vorschubbewegung des Handwerkzeugs.

Eine andere Variante der Erfindung kennzeichnet sich dadurch, daß der Schwingarm bzw. dessen mit dem Schlagpreßglied verbundenes Endstück in rückwärtiger Verlängerung zu einem der U-oder Bogen-Schenkel des Schlagpreßglieds verläuft. Bei einem aus Flachmaterial bestehenden Schwingarm ist letzterer nicht mittig zum Schlagpreßglied angeordnet, sondern gewissermaßen seitlich versetzt. Dies verbessert die Zugänglichkeit und schließt Beschädigungsgefahren dort aus, wo ein Kantenschutz nahe einer Fläche, beispielsweise Glasscheibe, befestigt werden muß. Es gibt durch aus Fälle, wo erst aufgrund dieser Ausbildung ein Einsatz dieses Handwerkzeugs möglich wird.

Eine andere Ausführungsform der Erfindung ist dadurch gekennzeichnet, daß der Schwingarm etwa mittig zum U-oder Bogen-Mittelstück des Schlagpreßglieds angeordnet ist. Dieser Ausbildung kommt dort Bedeutung zu, wo genügend Platz für den Schwingarm vorhanden ist. Die Krafteinleitung ist bei dieser symmetrischen oder zumindest annähernd symmetrischen Anordnung des Schlagpreßglieds am Schwingarm günstiger als bei der asymmetrischen Ausführung.

Das Schlagpreßglied ist in Vorschubrichtung des Handwerkzeugs bogenförmig gekrümmt. Die Krümmung kann je nach Anwendungsbereich sowohl in konvexer als auch konkaver Richtung verlaufen. Hierbei ist insbesondere der Verlauf der Kante maßgeblich, auf welche der Keder, die Zierleiste od. dgl. befestigt werden soll. Zumindest bei konvexer Krümmung kann der Bogen eventuell auch durch einen Winkel mit abgerundeter Ecke ersetzt werden.

Eine weitere Ausgestaltung der Erfindung besteht darin, daß die Arbeitsfläche des Schlagpreßglieds quer zur Vorschubrichtung eben verläuft und der Querschnitt des Schlagpreßglieds etwa rechteckig, dreieckförmig oder lanzenförmig ausgebildet oder als Kombination aus Rechteck und Dreieck bzw. Trapez ausgebildet ist. In Längsrichtung bzw. in Vorschubrichtung des Handwerkzeugs kann die schlagende Fläche sowohl eben als auch bogenförmig sein. Die verschiedenen Querschnittsformen des Schlagpreßglieds ermöglichen eine optimale Anpassung an das zu befestigende Element und die jeweiligen räumlichen Verhältnisse.

Eine weitere Variante der Erfindung ist dadurch gekennzeichnet, daß die Arbeitsfläche des Schlaggliedes quer zur Vorschubrichtung bogenförmig verläuft und der Querschnitt kreisförmig, halbkreisförmig oder als Halbkreis mit rückwärtiger Verstärkungsrippe gestaltet ist. Auch dieses Schlagpreßglied ist zur Lösung bestimmter Montageprobleme besonders gut bzw. besser geeignet als die zuvor beschriebenen.

Eine besonders bevorzugte Ausführungsform der Erfindung ist gekennzeichnet durch einen Zuführungs-Stützarm für das zu befestigende Bandmaterial wie Dichtungsstreifen, Keder und dgl., insbesondere im Kraftfahrzeugbau, mit einem bogen-oder winkelförmigen Stützglied, das in Vorschubrichtung des Handwerkzeugs gesehen dem Schlagpreßglied nacheilt, wobei der Stützarm insbesondere abnehmbar am Werkzeuggehäuse im Bereich der Antriebsachse angeordnet ist. Mit Hilfe dieses Zuführungs-Stützarms kann man den Dichtungsstreifen und dgl. im Arbeitsbereich des Schlagpreßglieds untergreifen und dadurch immer seine geordnete Zuführung zur momentanen Befestigungsstelle gewährleisten. So kann man beispielsweise den Dichtungsstreifen bogenförmig an eine gerade Blechkante heranführen und dadurch einerseits ein zu frühzeitiges Aufsitzen auf der Kante vermeiden und andererseits die jeweilige Montagestelle immer gut einsehen.

Die Erfindung wird nachstehend anhand der Zeichnung näher erläutert. Die Zeichnung zeigt ein Ausführungsbeispiel der Erfindung. Hierbei stellen dar:

Fig. 1 perspektivisch eine abgebrochene Darstellung des Handwerkzeugs,

Fig. 2 in etwas vergrößertem Maßstab eine Seitenansicht des Handwerkzeugs mit einer zweiten Ausführungsform des Schlagpreßglieds,

Fig. 3 wiederum perspektivisch den losen Schwingarm,

Fign. 4 u. 5 zwei verschiedene Ausführungsformen des Schwingarms mit Schlagpreßglied jeweils in einer abgebrochenen Seitenansicht,

Fign. 6 bis 9 verschiedene Querschnittsformen des Schlagpreßglieds,

Fig. 10 ein Arbeitsbeispiel mit abgebrochener Darstellung des Schwingarms und ohne den Antrieb.

Das elektrische Handwerkzeug 1 ist in bekannter Weise ausgebildet, und seine nicht näher dargestellte Antriebswelle 2 trägt einen abnehmbaren Schwingarm 3, der durch den Oszillationsantrieb in Winkelschwingungen hoher Frequenz von beispielsweise 20 000 Hüben pro Minute versetzt wird. Insbesondere an seinem freien Ende trägt der Schwingarm 3 erfindungsgemäß ein Schlagpreßglied 4, mit dessen Hilfe man beispielsweise einen Keder oder einen Kantenschutz 5 in einem fortlaufenden Arbeitsgang auf einer Materialkante, insbesondere dem freien Randbereich 6 eines Karosserieteils, schlagend aufpressen kann. Ein besonderes Anwendungsgebiet sind auch kombinierte streifenförmige Elemente aus Kantenschutz und Dichtelement, wie man sie im Türbereich von Kraftfahrzeugen heute üblicherweise verwendet.

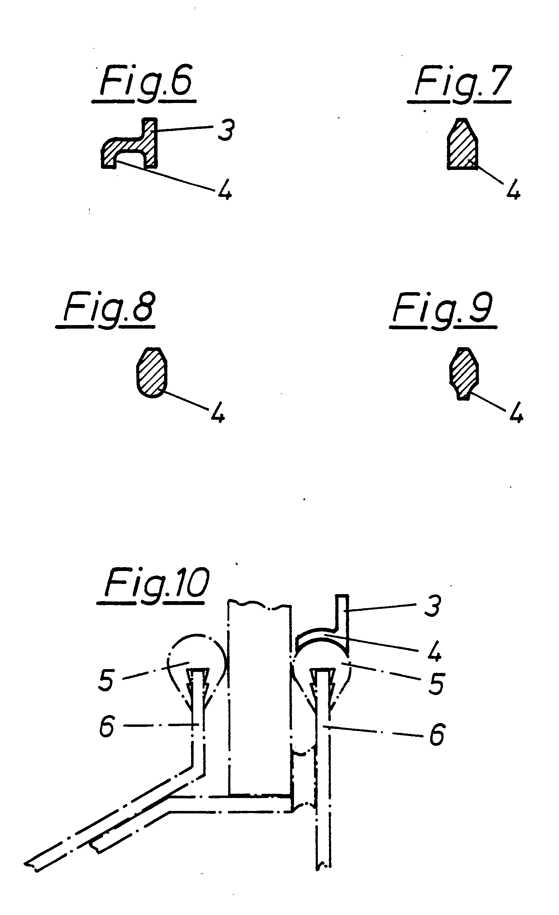

Der Schwingarm 3 ist bei den Ausführungsbeispielen als ebener einarmiger Hebel gezeichnet, jedoch kann er je nach Anwendungsfall auch ·abgewinkelt, abgekröpft oder in ähnlicher Weise räumlich gestaltet sein. Des weiteren ergibt sich aus den Fign. 6 bis 9, daß auch die Querschnittsform des Schlagpreßglieds an die jeweiligen Erfordernisse angepaßt werden kann. So zeigt Fig. 6 einen U-förmigen Querschnitt des Schlagpreßglieds, wobei der Schwingarm in rückwärtiger Verlängerung eines der beiden U-Schenkel verläuft. Das Schlagpreßglied der Fig. 7 hat die Querschnittsform eines Rechtecks mit aufgesetztem Trapez oder Dreieck. Die Querschnittsform des Schlagpreßglieds der Fig. 8 könnte man als Halbkreis mit aufgesetztem Trapez oder Dreieck bezeich nen. Diese Varianten und auch die Ausführungsform der Fig. 9 befinden sich zweckmäßigerweise am vorderen freien Ende des Schwingarms, wobei letzterer symmetrisch zur Symmetrieebene des Schlagpreßglieds angeordnet sein kann. Das Schlagpreßglied der Fig. 9 ist im Querschnitt lanzenförmig.

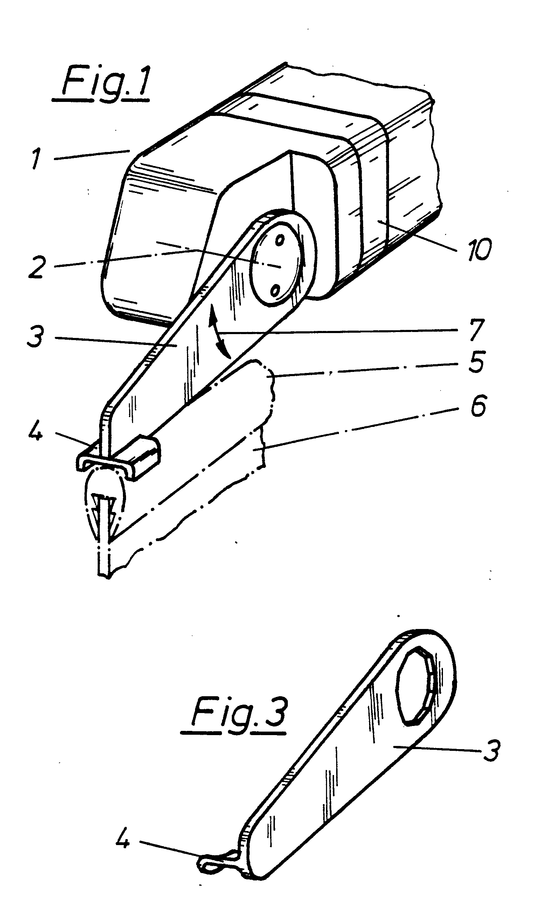

Im Gegensatz zur Fig. 6 ist das im Querschnitt ebenfalls U-förmige Schlagpreßglied 4 mittig zum Schwingarm 3 angeordnet. In Fig. 1 ist die Bewegung des Schwingarms 3 durch einen Doppelpfeil 7 symbolisiert.

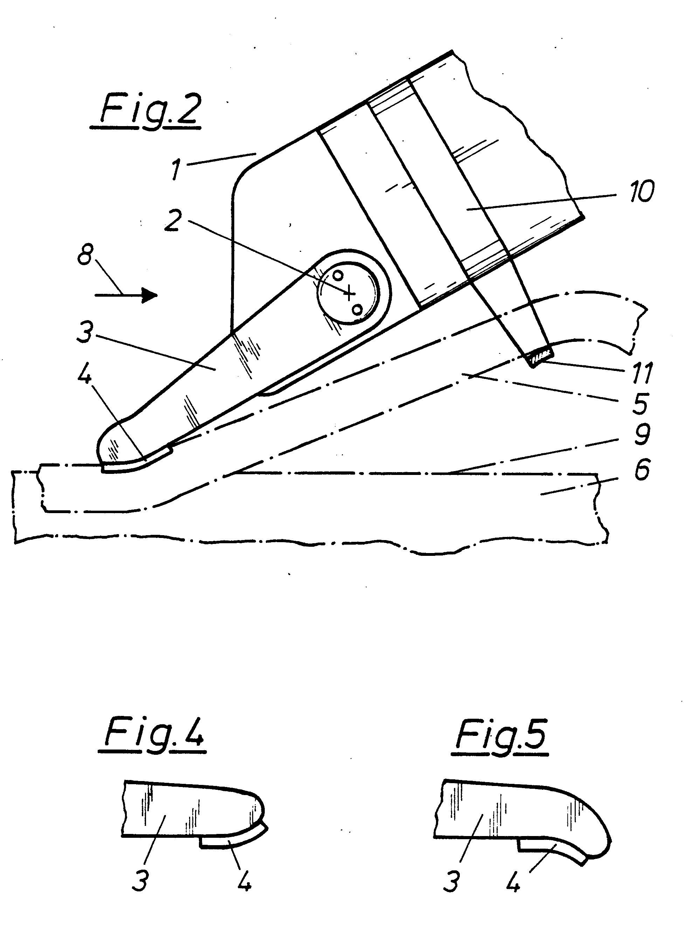

In Längsrichtung des Schwingarms 3 gesehen bzw. in Vorschubrichtung 8 des Handwerkzeugs verläuft das Schlagpreßglied 4 der Fig. 1 eben, während zumindest diejenigen der Fign. 3, 4 und 5 bogenförmig verlaufen. Dabei ist bei den Ausführungsbeispielen der Fign. 3 und 4 eine konvexe Schlagfläche vorgesehen, während die Schlagfläche der Fig. 5 einen konkaven Verlauf hat. Das Schlagpreßglied der Fig. 4 entspricht demjenigen der Fig. 2. Man erkennt, daß dieses Handwerkzeug besonders gut zur Montage einer Schutz-, Abdeck-oder Dichtleiste geeignet ist, wobei die Arbeitsrichtung von links nach rechts, also in Pfeilrichtung 8 verläuft. Zunächst wird das linke Ende des flexiblen Elements von Hand auf den freien Randberech aufgesteckt und dann mit Hilfe des Handwerkzeugs bis zum Anliegen an der Blechkante 10 od. dgl. schlagend aufgepreßt. Anschließend verfährt man das elektrische Handwerkzeug und befestigt so das Kantenschutzelement od. dgl. in einem fortlaufenden Arbeitsgang. Damit eine gleichmäßige Zuführung des Kantenschutzes 5 od. dgl. gewährleistet ist, befindet sich im Bereich der Antriebswelle bzw. des Antriebskopfes des elektrischen Handwerkzeugs ein Zuführungs-Stützarm 10 mit einem bogen-oder winkelförmigen Stützglied 11, welches den Kantenschutz 5 od. dgl. untergreift und dadurch ein zu frühes Aufliegen auf dem freien Randbereich verhindert. Damit ist ein gewisses Hochbiegen des Kantenschutzes 5 od. dgl. verbunden, welches das Einlaufen auf die Kante 9 und die Beobachtung der momentanen Arbeitsstelle erleichtert.

## Ansprüche

1. Handwerkzeug mit einer oszillierenden Antriebswelle zur Befestigung eines eine Arbeitsbewegung ausführenden Schwingarms, dadurch gekennzeichnet, daß sich am Schwingarm (3), insbesondere am freien Schwingarmende, ein Schlagpreßglied (4) befindet.

2. Handwerkzeug nach Anspruch 1, dadurch gekennzeichnet, daß der Schwingarm (3) formschlüssig und abnehmbar mit der Antriebswelle (2) verbunden ist.

3. Handwerkzeug nach Anspruch 1 oder 2, dadurch gekennzeichnet, daß die Arbeitsfläche des Schlagpreßglieds (4) quer zur Längsachse oder Längsrichtung des Schwingarms (3) bogen-oder U-förmig verläuft.

4. Handwerkzeug nach Anspruch 3, dadurch gekennzeichnet, daß der Schwingarm (3) bzw. dessen mit dem Schlagpreßglied (4) verbundenes Endstück in rückwärtiger Verlängerung zu einem der U-oder Bogen-Schenkel des Schlagpreßglieds (4) verläuft.

5. Handwerkung nach Anspruch 3, dadurch gekennzeichnet, daß der Schwingarm (3) etwa mittig zum U-oder Bogen-Mittelstück des Schlagpreßglieds (4) angeordnet ist.

6. Handwerkzeug nach wenigstens einem der vorhergehenden Ansprüche, dadurch gekennzeichnet, daß das Schlagpreßglied (4) in Vorschubrichtung (8) bogenförmig gekrümmt ist.

7. Handwerkzeug nach Anspruch 1 oder 2, dadurch gekennzeichnet, daß die Arbeitsfläche des Schlagpreßglieds (4) quer zur Vorschubrichtung (8) eben verläuft und der Querschnitt des Schlagpreßglieds (4) etwa rechteckig, dreieckförmig oder lanzenförmig ausgebildet oder als Kombination aus Rechteck und Dreieck bzw. Trapez ausgebildet ist.

8. Handwerkzeug nach einem der Ansprüche 1, 2, 6 oder 7, dadurch gekennzeichnet, daß die Arbeitsfläche des Schlagglieds (4) quer zur Vorschubrichtung (8) bogenförmig verläuft und der Querschnitt kreisförmig, halbkreisförmig oder als Halbkreis mit rückwärtiger Verstärkungsrippe gestaltet ist.

9. Handwerkzeug nach wenigstens einem der vorhergehenden Ansprüche, gekennzeichnet durch einen Zuführungs-Stützarm (10) für das zu befestigende Bandmaterial (5) wie Dichtungsstreifen, Keder und dgl., insbesondere im Kraftfahrzeugbau, mit einem bogen-oder winkelförmigen Stützglied -

(11), das in Vorschubrichtung (8) des Handwerkzeugs (1) gesehen dem Schlagpreßglied (4) nacheilt, wobei der Stützarm (10) insbesondere abnehmbar am Werkzeuggehäuse im Bereich der Antriebsachse (2) angeordnet ist.

## Fig.1

1

2

3

4

7

5

6

10

## Fig.3

3

4

## Fig.2

1

8 →

2

3

4

10

11

5

9

6

## Fig.4

3    4

## Fig.5

3    4

*Fig.6*

3

4

*Fig.7*

4

*Fig.8*

4

*Fig.9*

4

*Fig.10*

3

4

5

5

6

6

C.&E.FEIN ᴳᴹᴮᴴ&ᶜᴼ STUTTGART 24.